# EUROPÄISCHE PATENTSCHRIFT

(11) **EP 1 736 047 B1**
(45) Veröffentlichungstag und Bekanntmachung des Hinweises auf die Patenterteilung: **18.05.2011**
(21) Anmeldenummer: 06002617.6
(22) Anmeldetag: 09.02.2006
(51) Int. Cl.: A01K 31/16

(54) **Legenestanordnung für Geflügel**
Nesting box for poultry
Pondoir pour volailles

(30) Priorität: 22.06.2005 DE 202005009799 U; 15.07.2005 DE 202005011171 U; 01.09.2005 DE 202005013797 U
(43) Veröffentlichungstag der Anmeldung: 27.12.2006
(73) Patentinhaber: Kühlmann, Josef, 48366 Laer (DE)
(72) Erfinder: Kühlmann, Josef, 48366 Laer (DE)
(74) Vertreter: Habbel, Hans-Georg

(56) Entgegenhaltungen:
- EP-A2- 0 855 137
- FR-A- 2 801 471
- US-A- 4 364 332
- US-A- 5 058 530

## Beschreibung

Die Erfindung bezieht sich auf eine Legenestanordnung für Geflügel gemäß dem Oberbegriff des Anspruches 1.

Eine gattungsbildende Einrichtung ist beispielsweise aus der US-A 5 058 530 bekannt geworden. Bei dieser Anordnung ist ein Legenestboden vorgesehen, der zum Eierförderband hin geneigt angeordnet ist und an dem dem Eierförderband abgewandten Ende eine Hubvorrichtung aufweist, mit der der Boden so angehoben werden kann, daß er gleichzeitig das Legenest verschließt. Bei dieser Anordnung müssen die Hühner über das Eierförderband hinweg in das Legenest, d. h. die Eintrittsseite des Legenestes ist auf der gleichen Seite wie das Eierförderband angeordnet. Diese Anordnung hat den Nachteil, daß die Tiere ggf. auf dem Eierförderband liegende und geförderte Eier verletzen und damit unbrauchbar machen können.

Der Boden ist einteilig und eben ausgebildet und wird durch eine Hubvorrichtung in eine gewisse Neigung versetzt, die ausreichend ist, um die Eier zum Eierförderband hin zu fördern. Die Hubvorrichtung kann den Boden aber auch so weit hochziehen, daß dadurch der Zutritt für die Hühner zum Legenest verschlossen wird. Nachteilig bei dieser Anordnung ist, daß durch Anheben des Bodens die Abrollgeschwindigkeit der Eier eine Größe erreichen kann, die dazu führen kann, daß, wenn Eier dann auf Eier stoßen, die schon auf dem Eierförderband liegen, dies zur Zerstörung des einen oder anderen Eies führen kann.

Aus der DE 42 03 637 ist ein Boden für ein Legenest bekannt geworden, der mehrteilig ausgebildet ist und über einer Eiersammelvorrichtung vorgesehen wird. Ein solcher mehrteiliger Boden im Bereich eines Legenestes für Hühner ist aufwendig und weist zwangsläufig Gelenke auf, die im Bereich des Kotes der Tiere liegen und dadurch schnell einem Verschleiß oder einer Korrision ausgesetzt sind und damit unwirksam werden können.

Der Erfindung liegt die Aufgabe zugrunde, ein dem Gattungsbegriff entsprechendes Legenest vorzuschlagen, wobei das Verschließen des Nestes so gesteuert wird, daß nicht nur das Nest verschlossen wird, sondern das gleichzeitig sichergestellt ist, daß aufgrund irgendwelcher Schwierigkeiten, die sich noch im Nest befindlichen Eier zum Abrollen gebracht werden, ohne daß eine Zerstörung der Eier durch Anheben des Nestes und Verschließen des Nestes erfolgt. Gleichzeitig soll aber auch verhindert werden, daß beim Anheben des Bodens Tiere verletzt werden können.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird vorgeschlagen, daß der Nestboden sich über die ganze Breite des Legenestes erstreckt und eine Neigung aufweist, die vom Nesteintritt zum Eierförderer hin gerichtet ist. Hierbei ist gemäß der Erfindung vorgesehen, daß der Nesteintritt auf der dem Eierförderband abgewandten Seite des Legenestes vorgesehen ist. Der vorzugsweise auch in besonderer Weise ausgebildete Nestboden weist z. B. im Bereich des Nesteintritts ein Bodenteil auf, das eine Bodenneigung aufweist, die größer ist als in dem sich anschließenden Bodenteil. Der Boden ist mit einer Hubvorrichtung verbunden, die außermittig an dem Boden in Längsachse des Bodens gesehen angreift, wobei die Außermittigkeit dadurch erreicht wird, daß die Hubvorrichtung im Bereich des Nesteintritts angreift. Mit dieser Hubvorrichtung kann der Boden um eine Schwenkachse geschwenkt werden, so daß er dann den Nesteintritt verschließt.

Der eigentliche Nestboden ist schwenkbar im Bereich des Nesteintritts gelagert, d. h. das Ende des Bodens, das zum Eierförderband hin gerichtet ist, wird hochgeschwenkt, und im Bereich der schwenkbaren Lagerung ist der eigentliche Nestboden auch noch in der Höhe verschiebbar gelagert, so daß bei Betätigen der Hubvorrichtung zuerst ein Anheben des Bodens in diesem Bereich erfolgt, bevor eine Schwenkbewegung des Bodens eingeleitet wird.

Die Hubvorrichtung selbst besteht vorzugsweise aus einem Schwenkhebel und einer flexiblen Verbindung zwischen dem Schwenkhebel und dem Boden, wobei über die Länge des Nestabschnittes gesehen mindestens zwei Schwenkhebel und flexible Verbindungen vorgesehen sind.

Gemäß einem weiteren Merkmal der Erfindung ist der eigentliche Boden auf seiner zum Eierförderband hin gerichteten Seite mit einer flexiblen Abschlußvorrichtung versehen, die es ermöglicht, daß die Eier vom Boden zum Eierförderband gelangen können, wobei aber diese flexible Abschlußvorrichtung mit dem eigentlichen Boden angehoben wird, so daß, wenn die Hühner trotz dieser flexiblen Abschlußvorrichtung ihren Kopf über das Eierförderband erstreckt haben, die Hühner nicht verletzt werden.

Die Wirkungsweise der erfindungsgemäßen Einrichtung ist wie folgt:

Im Normalzustand ist der Boden im Bereich des Nestes mit seiner Neigung zum Eierförderband hin ausgerichtet gelagert. Der Bodenteil, der im Bereich des Nesteinganges vorgesehen ist, weist eine stärkere Neigung als der andere Bodenteil auf, so daß sichergestellt wird, daß Eier, die in diesem Bereich abgelegt werden, auch sicher zum Eierförderband hin gefördert werden, aber im Bereich nahe des Eierförderbandes weniger beschleunigt werden.

Soll nun der Boden angehoben und damit das Nest verschlossen werden, tritt bei Betätigung der Hubvorrichtung nicht sofort eine Schwenkbewegung des Bodens ein, sondern, da der Boden zwar schwenkbar im Bereich des Nesteintritts gelagert ist, aber diese Lagerung auch in der Höhe verschiebbar ausgebildet ist, wird zuerst der Boden im Bereich des Nesteintrittes angehoben, da die Hubvorrichtung außermittig verschoben zum Nesteintritt, angeordnet ist. Dies bewirkt, daß beispielsweise der Boden, der eine normale Neigung von 11,5° gegenüber der Horizontalen aufweist, nunmehr eine Neigung von 16° beispielsweise aufweist, wodurch alle noch im Nest befindlichen und aus irgendwelchen Gründen nicht abgerollten Eier zum Eierförderband hin gefördert werden. Auch werden durch diese Bewegung Tiere, die sich noch im Nest befinden, veranlaßt, das Nest zu verlassen.

Sobald der Boden in seiner verschiebbaren Lagerung im oberen Ende angekommen ist, tritt nun die Schwenkbewegung des Bodens ein und die Hubvorrichtung hebt den Boden so an, daß nunmehr der Zugang zum Nerst für die Hühner verschlossen wird.

Die Wirkung der flexiblen Abschlußvorrichtung ist vorstehend schon erläutert.

Ein Ausführungsbeispiel der Erfindung zeigen die Zeichnungen. Hierbei zeigt
- Fig. 1: einen Schnitt durch ein Legenest, die
- Fig. 2: vier verschiedene Stellungen des Nestbodens von der Normalstellung bis hin zur Verschlußstellung des Nestes und in
- Fig. 3: in einem größeren Maßstab ein Blick auf die flexible Abschlußvorrichtung, die auf der zum Eierförderband hin gerichteten Seite des Bodens angeordnet ist.

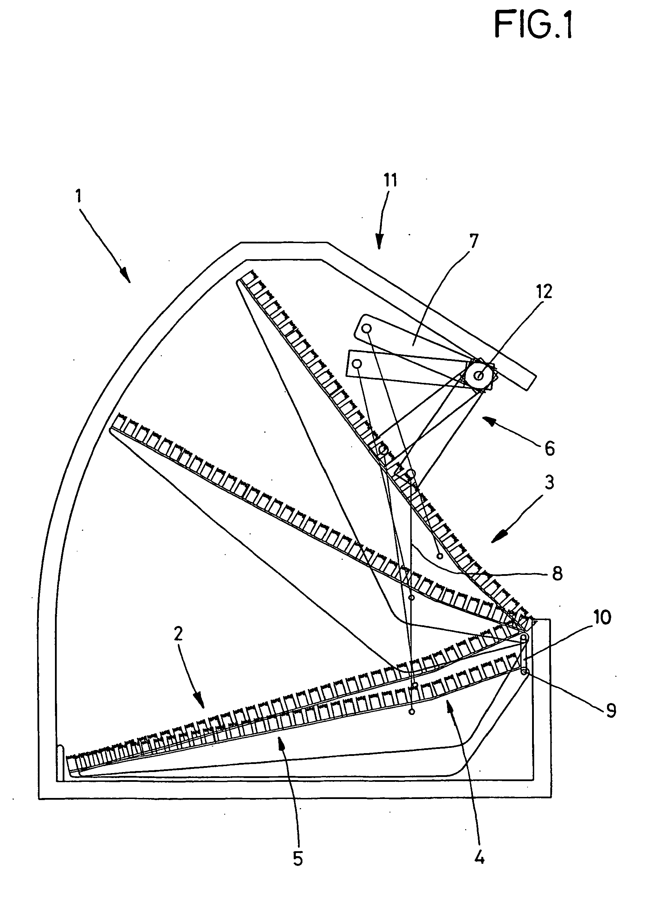

In Fig. 1 ist ein Legenest dargestellt, in welchem ein Boden 2 vorgesehen ist, der in besonderer Weise als Legenestboden ausgebildet ist. Der Boden ist im Bereich des Nesteintrittes 3 schwenkbar und verstellbar gelagert, während gegenüber dem Nesteintritt 3 ein in der Zeichnung nicht dargestelltes Eierförderband vorgesehen ist, auf das die auf dem Boden 2 abgelegten Eier rollen und abtransportiert werden können.

Der Boden 2 ist in seiner Gestaltung zweiteilig ausgebildet und weist ein Bodenteil 4 und ein Bodenteil 5 auf. Das Bodenteil 4 weist eine stärkere Neigung als das Bodenteil 5 auf, so daß in diesem Bereich abgelegte Eier etwas mehr beschleunigt werden hinsichtlich des Abrollens als die in dem Bodenteil 5 abgelegten Eier.

Der Nestboden 2 weist im Bereich des Bodenteiles 4 ein Schwenklager 9 auf, das sich in einer Nut 10 nach oben verschieben kann. Oberhalb des Bodens und unterhalb des Nestdaches 11 ist eine Hubvorrichtung 6 vorgesehen, die bei dem dargestellten Ausführungsbeispiel aus einem Schwenkhebel 7 gebildet wird, der um eine Schwenkwelle 12 geschwenkt werden kann, wobei an seinem freien Ende eine flexible Verbindung 8, beispielsweise ein Kabel anschließt, das anderenendes am Boden 2 anschließt.

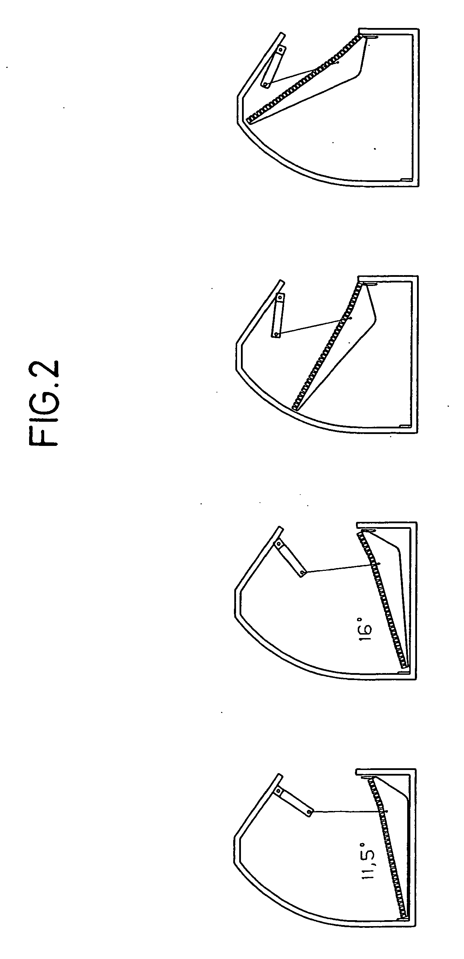

Der Anschluß der flexiblen Verbindung 8 am Boden 2 ist außermittig über die Breite des Bodens gesehen angeordnet, und zwar zum Nesteintritt 3 hin verschoben, so daß bei einer Betätigung des Schwenkhebels 7 nunmehr zuerst der Boden 2 mit seinem Schwenklager 9 in der Nut 10 nach oben angehoben wird, während das vordere Teil des Bodenteiles 5 weiterhin in seiner Normalstellung verbleibt. Wird die Hubvorrichtung 6 weiter betätigt, schwenkt der Boden um die Schwenkachse 9, so wie dies in Fig. 2 in einzelnen Schritten dargestellt ist.

Fig. 2 zeigt deutlich, daß im Normalfall der Boden beispielsweise eine Neigung von 11.5° aufweist, aber nach erster Betätigung des Schwenkhebels 7 eine Neigung von 16°, so daß, wenn das Legenest nachts verschlossen werden soll, sichergestellt wird, daß alle im Legenest befindlichen Eier abrollen, bevor der Boden in die dritte Stellung, die in Fig. 2 dargestellt ist, und in die vierte Endstellung gelangt.

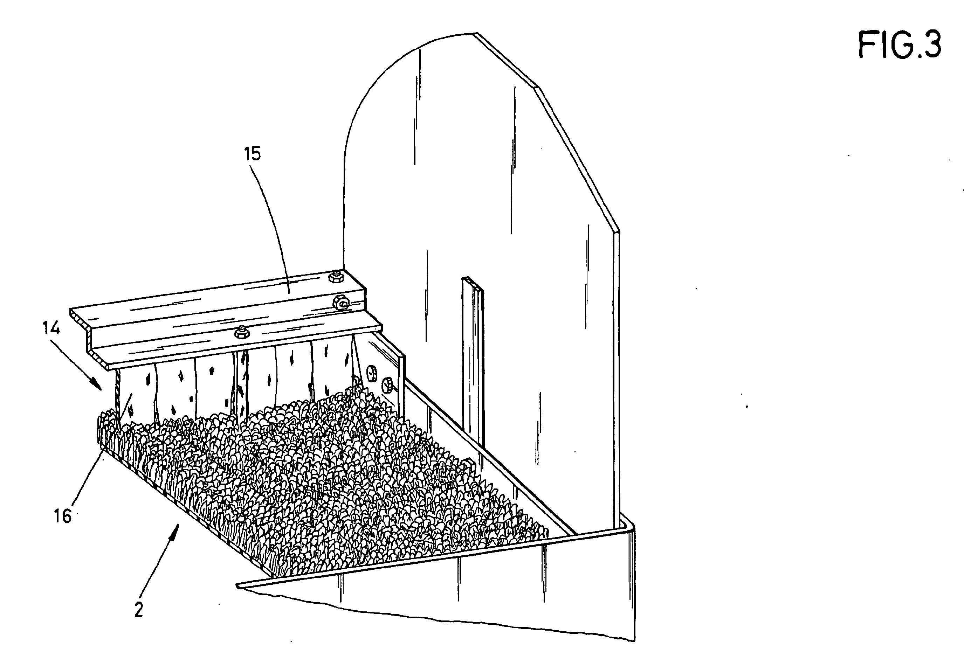

Fig. 3 zeigt einen Ausschnitt aus einem Boden 2, wobei aus Übersichtlichkeitsgründen die eigentliche Hubvorrichtung 6 weggebrochen ist. Es ist aber erkennbar, daß der Boden 2 auf seiner zum Eierförderband hin gerichteten Seite mit einer flexiblen Abschlußvorrichtung versehen ist, die aus einer Trägerschiene 15 und von dieser getragenen flexiblen lappenartigen Elementen 16 besteht, die gewährleisten, daß die Eier vom Boden durchrollen können zum Eierförderband, die einen Blickkontakt der Hühner mit den Eiern und dem Eierförderband verhindern, die aber, wenn die Hühner trotzdem den Kopf über das Eierförderband erstrecken, bewirken, daß ein Verletzen der Tiere dadurch ausgeschlossen ist, daß diese flexible Abschlußvorrichtung 14 mit dem Boden 2 angehoben wird.

## Patentansprüche

1. Legenestanordnung (1) für Geflügel mit einem schwenkbaren Boden (2) zur Ablauge der Eier und einem dem Boden zugeordneten Eierförderband, wobei der Boden sich über die ganze Breite bzw. Tiefe des Legenestes erstreckt, eine Neigung aufweist, die zum Eierförderband hin gerichtet ist und eine Hubvorrichtung (6) besitzt, mit der der Boden aus einer Normalstellung in eine das Legenest verschließende Stellung gehoben werden kann, **dadurch gekennzeichnet, daß**
a) der Boden (2) einteilig ausgebildet ist, aber an seinem dem Eierförderband abgewandten Ende (4) eine größere Neigung aufweist als auf dem zum Eierförderband hin gerichteten Bereich (5),
b) der Nesteintritt (3) auf der dem Eierförderband abgewandten Seite des Legenestes (1) vorgesehen ist und
c) die Hubvorrichtung (6) über die Breite des Bodens (2) gesehen außermittig und zum Nesteintritt (3) versetzt angreift.

2. Legenestanordnung nach Anspruch 1, **dadurch gekennzeichnet, daß** das nesteintrittsseitige Ende des Bodens (2) ein Schwenklager (9) aufweist und dieses Schwenklager (9) in der Höhe verschiebbar gelagert ist.

3. Legenestanordnung nach Anspruch 1 oder 2, **dadurch gekennzeichnet, daß** die Hubvorrichtung (6) durch einen Schwenkhebel (7) und eine flexible Verbindung (8) zwischen dem Schwenkhebel (7) und dem Boden (2) gebildet ist, wobei über die Länge jedes Nestabschnittes (1) gesehen, mindestens zwei Schewnkhebel (7) und flexible Verbindungen (8) vorgesehen sind.

4. Legenestanordnung nach einem oder mehreren der vorhergehenden Ansprüche, **dadurch gekennzeichnet, daß** mit dem heb- und senkbaren Boden (2) zum Eierförderband hin gerichtet, eine flexible Abschlußvorrichtung verbunden ist.

## Claims

1. Laying nest arrangement (1) for poultry having an pivotable floor (2) for depositing the eggs and an egg conveyor belt facing towards the floor, where the bottom extends across the entire width or depth of the laying nest and is inclined towards the egg conveyor belt, and having a lifting means (6) by which the floor can be lifted from a normal position to a position closing the laying nest, **characterised in that**
a. the floor (2) is constructed in one part but at its end (4) facing away from the egg conveyor belt is inclined more steeply than on the part (5) facing towards the egg conveyor belt,
b. the nest entrance (3) is disposed on the side of the laying nest (1) facing away from the egg conveyor belt and
c. the lifting means (6), viewed across the width of the floor (2), acts off-centre and off-set from the nest entrance (3).

2. Laying nest arrangement in accordance with claim 1, **characterised in that** the end of the floor (2) on the nest entrance side incorporates a swivel bearing (9) and this swivel bearing (9) is mounted so as to be height-adjustable.

3. Laying nest arrangement in accordance with claim 1 or 2, **characterised in that** the lifting means (6) is formed by a swivel lever (7) and a flexible link (8) between the swivel lever (7) and the floor (2), where, viewed along the length of each nest section (1), two or more swivel levers (7) and flexible links (8) are disposed.

4. Laying nest arrangement in accordance with one or more of the foregoing claims, **characterised in that** a flexible closing means is linked to the raisable and lowerable floor (2) facing towards the egg conveyor belt.

## Revendications

1. Configuration (1) de nid de ponte pour volaille, avec un fond basculant (2) servant à la déposition des oeufs et avec un tapis convoyeur d'oeufs affecté à ce fond, sachant que le fond s'étend sur toute la largeur et la profondeur du nit de ponte, qu'il présente une inclinaison en direction du tapis convoyeur d'oeufs et possède un dispositif de levage (6) permettant de soulever le fond de lui faire quitter une position normale et gagner une position obturant le nid de ponte, **caractérisée en ce que**
a) le fond (2) est configuré monopièce, mais présente en son extrémité (4) opposée au tapis convoyeur d'oeufs une plus forte inclinaison que dans la zone (5) regardant le tapis convoyeur d'oeufs,
b) l'entrée du nid (3) est prévue sur le côté du nid de ponte (1) opposé au tapis convoyeur d'oeufs,
c) le dispositif de levage (6) attaque de façon décentrée observée sur la largeur du fond (2), et décalée par rapport à l'entrée du nid (3).

2. Configuration de nid de ponte selon la revendication 1, **caractérisée en ce que** l'extrémité du fond (2) sur le côté d'entrée du nid présente un palier de pivotement (9) et que ce palier de pivotement (9) est en appui de façon permettant de le déplacer en hauteur.

3. Configuration de nid de ponte selon la revendication 1 ou 2, **caractérisée en ce que** le dispositif de levage (6) est formé par un levier de pivotement (7) et une jonction flexible (8) entre le levier de pivotement (7) et le fond (2), sachant qu'au moins deux leviers de pivotement (7) et jonctions flexibles (8) sont prévus considérés sur la longueur de chaque segment (1) de nid.

4. Configuration de nid de ponte selon une ou plusieurs des revendications précédentes, **caractérisée en ce qu'**est prévu avec le fond (2) soulevable et abaissable un dispositif de fermeture flexible orienté vers le tapis convoyeur d'oeufs.
